# EUROPEAN PATENT SPECIFICATION

(11) **EP 1 157 295 B1**
(45) Date of publication and mention of the grant of the patent: **06.11.2002**
(21) Application number: 00902724.4
(22) Date of filing: 07.02.2000
(51) Int. Cl.: G02B 6/44

(54) **OPTICAL FIBRE MANAGEMENT**
MANAGEMENT FÜR OPTISCHE FASERN
GESTION DE FIBRES OPTIQUES

(30) Priority: 01.03.1999 GB 9904598; 24.06.1999 GB 9914753
(43) Date of publication of application: 28.11.2001
(73) Proprietor: Tyco Electronics Raychem NV, 3010 Kessel-lo (BE)
(72) Inventor: WAMBEKE, Alain, B-3440 Zoutleeuw (BE); BRANTS, Jos, Marie, Roger, B-3360 Korbeek-Lo (BE); VAN NOTEN, Lodewijk, B-3000 Leuven (BE)
(74) Representative: Beitsma, Gerhard Romano
(86) International application number: GB0000344
(87) International publication number: WO00052509

(56) References cited:
- EP-A- 0 253 728
- EP-A- 0 594 913
- WO-A-95/29418
- DE-A- 3 540 473
- GB-A- 2 176 907
- US-A- 4 995 688

## Description

The present invention relates generally to optical fibre management, and particularly to management systems for storage of spare lengths of optical fibre such as in patch panels or distribution centres whereby to allow subsequent reassignment or re-routing of optical fibres within the system.

Optical fibre management systems or distribution centres are used for the organisation of optical cables and connectors at junctions in cabling systems and other locations where equipment such as splitters or multiplexers are connected to the fibres. Such systems may be contained in cabinets or on equipment racks with the optical fibre management systems for handling connectors being supported on a panel known as a patch panel. The patch panel determines the interconnections made between optical fibres of the system and each other and/or equipment such as splitters and multiplexers, and houses connectors or splices by which the connections are made. An example of a patch panel is disclosed in International Patent Application WO 95/29418 (Raychem).

However, because communications networks are subject to change over time it is necessary to be able to make changes to the connections or splicing of the optical fibres after they have been in service for some time. One of the physical constraints on optical fibres is that they must not be bent at a radius less than the so-called minimum bending radius at which damage to the transmission properties of the fibre takes place, and care must be taken to ensure that there is a sufficient spare length of optical fibre in the vicinity of a connector or splice to allow it to be manipulated for such changes to be made without bending it beyond the minimum bending radius. Moreover, if splices have to be cut and re-made this involves removal of a short length of the optical fibre and it is therefore necessary to have a sufficient spare length to accommodate several such losses in the event that the fibre is reassigned several times during its working life. In some circumstances the length of spare optical fibre retained for this purpose in an optical fibre management system may be quite considerable, for example up to 9 or 10 metres of each fibre. When there are a large number of fibres in the rack or cabinet of a connection system the possibility of entanglement and confusion of such long lengths of so many cables must be avoided in order to ensure that operator time in effecting changes is not inordinately extended, and also to ensure that certainty in the allocation of the fibres in their new connections is not compromised.

For this purpose several different arrangements for organising the storage of the spare lengths of optical fibre are known, this often involving an array of individual housings (frequently referred to as trays because of their relatively flat configuration) each provided with means for guiding and locating turns or coils of optical fibres within them. Such coils are usually formed, starting from an input or output end of the optical fibre after it has been assigned its connection, by positioning the optical fibre within the storage tray, engaging it in or under retainers and guides and laying it in position starting from one end and positioning the free end either as such or making an appropriate connection with it. In such an arrangement individual optical fibres are coiled into the tray one at a time and although each coil is individual adjacent coils can overlap in the tray, which may result in more than one fibre being extracted from a tray when it is necessary at a later date to reassign one of the fibres. This results in the possibility of confusion and incorrect assignment, as well as requiring the unused fibres to be rewound back into the tray after the reassignment operation has been completed. It also means that coils of fibre are wound individually and in circumstances where very long spare lengths of fibre are used this can be a time consuming operation, especially as each fibre must be carefully laid into the tray following a pre-assigned route determined by the guides.

United States Patent US 4,995,688 describes (Fig. 32) optical fibre distribution frame in which a tray is provided with a rotatable spool having a central boss or spigot onto which an intermediate bight or loop of a spare length of optical fibre can be engaged, allowing the spool to be then rotated by means of finger holes to draw the spare length of optical fibre onto the tray "doubled" that is with each part of the optical fibre from the loop to a respective end lying side by side and coiled on the spool. This has the advantage of effectively halving the length of fibre which must be wound in a coil but has the disadvantage that a complex manipulation is required of the moving parts of the tray in order to draw the fibre onto the rotatable spool. Moreover, since patch panels may have a relatively large number of storage trays these must be made as economically as possible, and a multiple part tray having moving elements obviously significantly increases the cost.

British Patent Application GB 2,176,907 discloses a housing for storing a spare length of fibre. The housing is provided with three or more upstanding walls defining storage regions for fibre loops of at least two different lengths. The housing may be provided with a detachable lid. The fibre entrance and exit points are constituted by notches located near the centre of the housing. The material of this Prior Art housing is not disclosed.

The present invention seeks to provide a housing, typically in the form of a so-called storage tray or of a storage container which can be accommodated in a tray or shelf, in which a spare length of optical fibre can be retained securely, quickly and individually, and which has no moving parts. Providing such trays can be made economically it is then possible for each individual optical fibre to be retained on an individual tray thereby making it possible for reassignment of an optical fibre to be made with certainty without disturbing the other fibres in the network. It is therefore another object of the present invention to provide an optical fibre housing which can be made economically. It is a further object of the present invention to provide an optical fibre housing which can be easily handled and which allows fibres to be easily inserted and/or removed.

To meet these and other objects the present invention provides a housing for receiving and retaining a spare length of optical fibre, which housing comprises two generally planar support members having corresponding peripheral rims which contact one another at the perimeter thereof, and holding means for holding the two support members together at a point spaced from the rims thereof, characterised by at least one of the members having sufficient resilience at least at or in the region of the rim thereof to allow it to flex so that an optical fibre can be introduced into or withdrawn from the housing by pressing and thus passing it between the two contacting rims of the two support members held together.

By providing at least one resilient member allowing it to flex at its rim a very easy access to the interior of the housing is obtained. The access opening thus provided is self-closing, thereby facilitating the installation of the fibre. In addition, a fibre accomodated in the housing can easily be pulled out.

There are preferably provided means within the housing for engagement by a loop of optical fibre formed intermediate the ends thereof. The optical fibre can then be wound "doubled" into the housing thereby ensuring a rapid winding of a spare length of optical fibre into a storage coil, having the two ends of the coil closely adjacent one another and therefore readily locatable.

The said loop-engagement means within the housing may comprise a formation spanning the interior space between the said two generally planar members. This formation may be at least one boss projecting from a base of at least one of the said two members. Preferably, however, the said formation comprises two facing bosses each projecting from a base of a respective member, the two bosses being in contact with one another to define the said formation spanning the interior space between the two members.

In order to ensure that the optical fibre is not bent at a radius less than the minimum bend radius for optical fibres there are preferably also provided guide means within the interior of the housing for guiding the spare length of optical fibre wound within the housing. Such internal guide means preferably comprise guide bosses, preferably formed as substantially circular upstanding islands, projecting from at least one of the said two members. In the preferred embodiment of the invention these bosses project from both members and contact one another to form a structure spanning the interior of the housing to form the said guides.

The guides for determining the path of the fibre when coiled onto the tray may include subsidiary bosses upstanding from the base of the support member and having at least arcuately curved guide surfaces. Such guides may also include upstanding parallel walls together defining a substantially continuous path for receiving a length of optical fibre. In such a configuration the said continuous path may be effectively spiral, although not necessarily circular nor defined continuously in that the said walls may define parts of the path as a channel whilst other parts of the path may be less precisely defined, for example between two points at which the fibre may lie straight.

In one embodiment of the invention the upstanding parallel walls are spaced by a distance sufficient to allow only two portions of an optical fibre to lie side-by-side without one crossing over the other in the channel defined thereby. This has a particular advantage in that very "thin" housings or trays may thus be formed to allow a large number of fibres to be stored adjacent one another in a minimum space.

It will be appreciated that by avoiding cross-overs of optical fibres within a housing or tray the dimension of the tray transverse its general plane (namely the "height" of the walls defining the fibre-receiving channel) can be maintained at a value close to or at least not substantially greater than the diameter of the optical fibre intended to be used in the system such that an assembly comprising a supporting tray and a coiled optical fibre will occupy a thickness not substantially greater than the diameter of the optical fibre itself thereby minimising the transverse dimensions of the assembly so that the greatest possible number of coils of spare length of optical fibre can be positioned in side-by-side relationship within a rack or cabinet. In such an embodiment the coil of the spare length of optical fibre is placed on the tray by forming a loop at approximately a mid point of the fibre, engaging it on the said boss, and then winding the two side-by-side parts of the "doubled" fibre into the channel defined on the tray. By doubling the fibre this effectively halves its length and reduces by half the amount of time needed to coil it into a tray and, at the same time, leaves both the input and output end of the fibre together and at a common point simplifying the management and avoiding the necessity, having found one end of a fibre, of tracing it through to locate the other end.

The means for holding the two members together preferably comprise retaining means on the said guide bosses themselves. In such configuration the boss or bosses defining the formation for receiving the intermediate loop are not connected together, thereby allowing the two contacting faces of the bosses to be flexed apart to allow an intermediate portion of an optical fibre to pass between them to form the said loop.

The retaining means holding the said two members together may be of any suitable form. In particular, they may comprise co-operating releasable fasting means on the said guide bosses. This has advantages in that it allows the two members to be clipped together either before or after the loop of optical fibre has been formed around the said formation whereafter the spare length of optical fibre can be quickly and easily wound into the housing by passing it around the perimeter of the housing defined by the two contacting rims of the members, the optical fibre sliding between the two rims into the interior of the housing in the process. This has advantages in that it is unnecessary to guide the fibres into closely-defined channels so that the coil can be wound very quickly and easily once the intermediate loop has been formed and, again, the effective "doubling" of the optical fibre means that the overall length is halved thereby halving the amount of time taken to coil it down into the housing. The releasable fastening means may, for example, be snap-engagement elements formed on the respective members.

Alternatively the said retaining means may comprise permanent fixing means on the said guide bosses. Such permanent fixing means may be contacting components which can be secured together by adhesive or by welding such as ultrasonic welding.

In a preferred embodiment of the invention at least one rim of at least one of the said members has a recessed portion forming, in the said housing, an opening for receiving a connector at one end of the optical fibre and through which the said intermediate loop can be introduced when the two members are held together.

In an advantageous embodiment which facilitates the winding of a spare length of optical fibre into such a housing, at least one of the members has an aperture to allow the user to insert a the removable member into the interior of the housing so as to form a temporary guide means for winding of the optical fibre into the housing. Preferably, each of the said generally planar members have corresponding apertures so as to define an aperture passing through the housing.

The said temporary guide means may be formed by the insertion of a digit, digits or other suitable member (such as a pencil) into the interior of the housing. It will be understood that an inserted finger or fingers (say) will largely or wholly span the gap between the planar members and enable the user to wind the optical fibre into the housing and around the finger or fingers. At or towards the end of the winding the finger or fingers may be removed, leaving the length of fibre looped in the housing, and if a connector is fitted at the end of the fibre it can be positioned at an appropriate point along the perimeter of the housing simply by drawing it to the desired position thereby reducing the size of the adjacent turn of the winding.

Preferably the housing will be additionally provided with one or more permanent guide means, preferably guide embossments. More preferably, at least one of the planar support members will also have a recessed portion at the rim thereof so as to form an opening for receiving a connector therein or adjacent thereto.

In such an embodiment the user may wind the optical fibre into the interior of the housing around the permanent guide means (embossments). However, if it is desired to form a loose winding a finger may first be inserted into the aperture to define temporary guide means and the winding continued around the guide means and the finger. At the end of the winding, removal of the finger leaves some slack in the wound loops. This then allows the convenient positioning of a connector at the end of the fibre by pulling on the end of the fibre until the connector can be located for example in a lateral opening in the rim of the housing. Both the spare optical fibre and the optical fibre connector are thus neatly and securely stored within the housing.

Suitable materials for the production of the members comprise Vo polycarbonate (typically with suitable additives) and the members may be vacuum formed with a thickness in the region of 0.5mm.

In embodiments having releasable fastening means these may comprise co-operating apertures and projections formed in pairs on the said guide bosses, the relative dimensions of the apertures and projections being such that a projection can snap engage into an aperture in register therewith upon assembly of the two members to form a housing. In this way the two members may be identical, therefore needing only a single mould for production, inversion of one member reversing the apertures and projections such that each projection can engage a co-operating aperture when the rims of the two members are placed in register.

Embodiments of the present invention will now be more particularly described, by way of example, with reference to the accompanying drawings, in which:
Figure 1 is a perspective view of a housing formed from two identical half-shells;
Figure 2 is a plan view of the embodiment of Figure 1;
Figure 3 is a side view, in the direction of the arrow A of Figure 2;
Figure 4 is an end view seen in the direction of the arrow B of Figure 2;
Figure 5 is a persprective view showing the two casing halves before being brought together with a loop of optical fibre shown at the start of winding a coil of a spare length of optical fibre;
Figure 6 is a perspective view (with the housing shown as transparent members) with a spare length of optical fibre wound within the housing;
Figure 7 is a perspective view of a storage tray formed as a second embodiment of the invention;
Figure 8 is a simplified perspective view of a patch panel cabinet showing a plurality of storage trays or housings in an assembly; and
Figure 9 is a perspective view of a storage tray formed as a third embodiment of the invention.

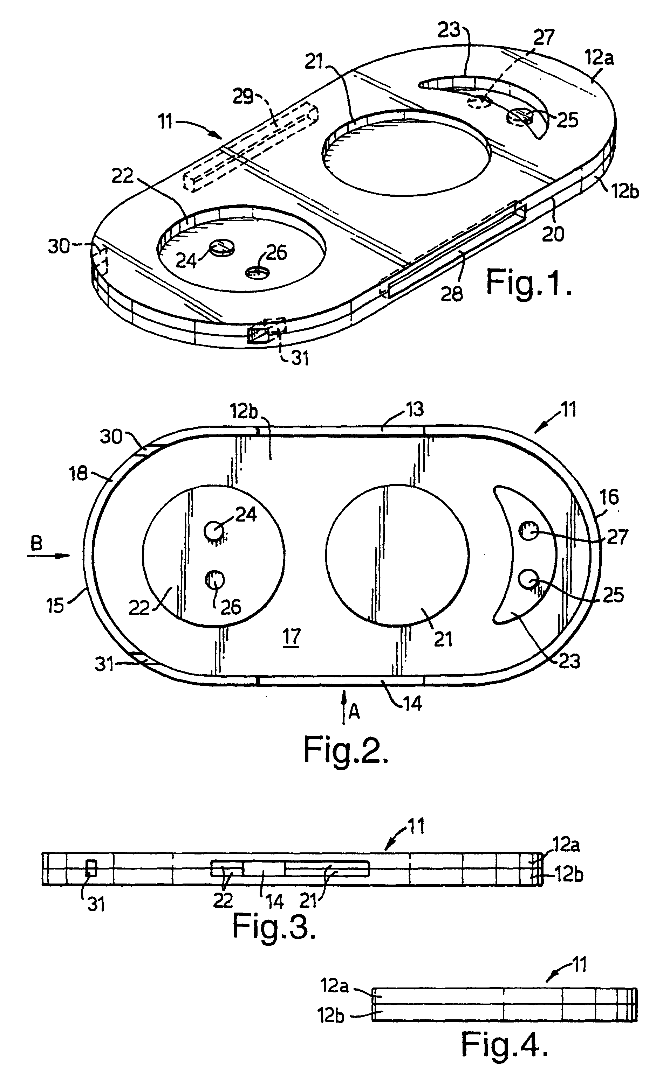

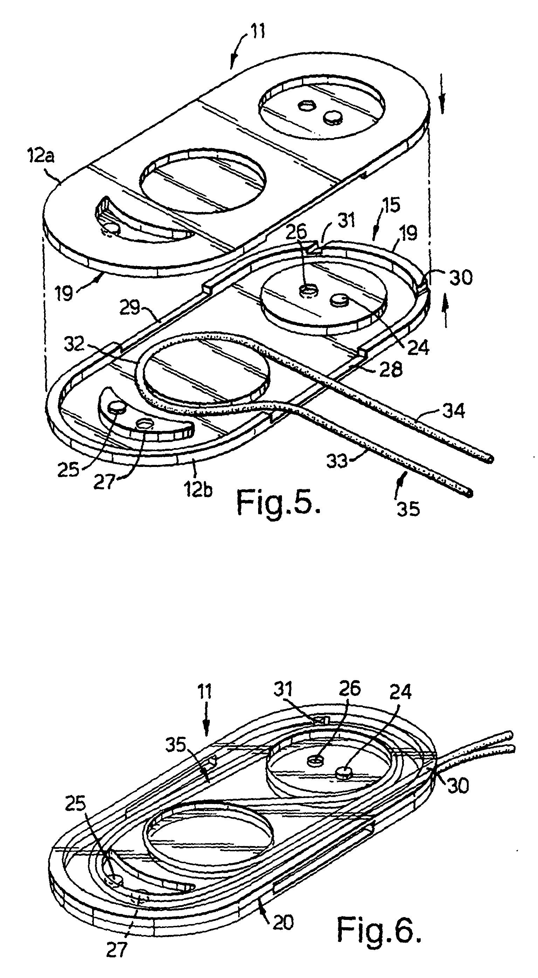

Referring now to the drawings, and particularly to Figures 1 to 6, a storage tray generally indicated 11 for a spare length of optical fibre, such as a pigtail (namely a length of optical fibre having a connector at one end and a spare end for splicing to another optical fibre) comprises two identical half-shells 12a, 12b (the latter of which is shown in plan view in Figure 2) having a generally oval configuration with two parallel rectilinear sides 13, 14 and two semi-circular ends 15, 16 (Figures 1 & 2). Each half shell 12 has a substantially flat base 17 surrounded by a perimeteral wall 18 the free edge 19 of which (see Figure 5) defines a rim or lip 19 which, when two half-shells 11 are placed face-to-face with their respective rims in register, defines an encircling junction line 20 (Figure 6).

The two half shells have respective bosses or "islands" upstanding from the base 17. In the embodiments of Figures 1 to 8 these comprise three islands in a row, a central island 21 of circular outline and two end islands, one of which, the island 22, is also circular and the other, 23, being generally crescent shaped. The radius of curvature of the circular islands 21, 22 and the "outer" curved surface of the crescent-shape island 23 is greater than the minimum bending radius of an optical fibre to be stored in the housing.

On the upper surfaces of the two end bosses 22, 23 are formed respective circular projections 24, 25 and respective circular apertures 26, 27. These are of cooperating dimensions such that when one half shell, such as the half shell 12a is inverted and placed over the other half shell 12b as illustrated in Figures 1, 3 and 5, the projections 24, 25 are in register with openings 26, 27 and allow the two islands to be snap-engaged together thereby holding the two half shells 12a, 12b together at regions spaced from the rim 19 thereof.

As can be seen particularly in Figure 5, each rim 19 has two notches or recesses 28, 29 in the rectilinear portions and two notches 30, 31 in the curved end 15. These form openings, identified by the same reference numerals, namely 28, 29 and 30, 31 in the housing formed by two superimposed half shells as illustrated in Figure 1. The recesses or (in the completed housing) openings 28, 29 allow a loop of optical fibre 35 such as the loop 32 of Figure 5 to be introduced into the housing either before or after the two half shells have been snap-engaged together by engagement of the co-operating projections 24, 25 and apertures 26, 27 on the islands 22, 23 with two separate portions 33, 34 of optical fibre or pigtail 35 (as defined above) lying side by side. Thereafter, with the two half shells held together, the two portions 33, 34 can be wound around the islands 22, 23 by passing the two portions 33, 34 between the rims 19 in a quick one-handed coiling motion allowing the spare length of optical fibre, even up to 9 or 10 metres long, to be coiled into the housing quickly and easily. The facing rims 19, held together merely by the resilience of the half shells 12a, 12b serve to hold the coiled spare length of optical fibre or pigtail securely without any risk of entanglement, and the two ends of the optical fibre can be led out from the housing through one of the openings 30, 31. In another embodiment, not shown, there may be a greater number of openings such as the openings 30, 31, for example in matching positions at the opposite end from the openings 30, 31. To facilitate this there may be only two bosses in such an embodiment instead of the three illustrated in Figures 1 to 6. The additional openings give greater flexibility in determining where the fibres exit from the housing or cassette, giving greater ease of use, and the provision of only two islands makes the tray entirely symmetrical.

If appropriate, a connector at one end of the pigtail may be passed through the opening 28 or 29 into the housing for storage and easy retrieval at a later time.

It will be noted that, because the two central islands 21 of each half shell 12a, 12b are not provided with interconnection means such as the projections and holes of the islands 22, 23, these central islands 21 form a structure spanning the interior of the housing 11. This structure can provide a guide surface for the loop 32 of the optical fibre but can, with light forces, be separated by the flexibility of the material to allow the loop 32 to pass between the two islands 21 if the two half shells 12a, 12b have been clicked together before the loop 32 of optical fibre is introduced into the housing.

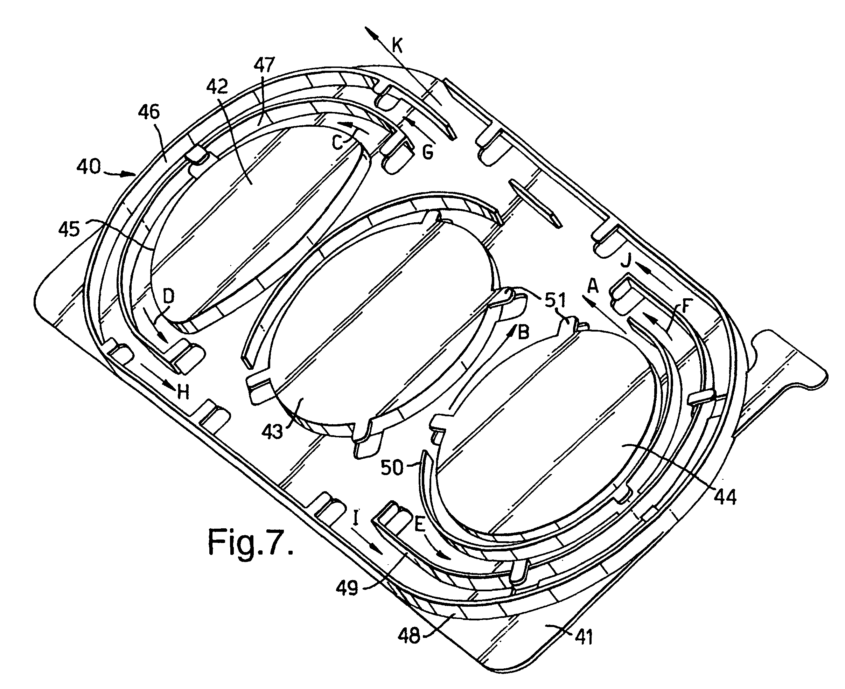

Figure 7 illustrates an alternative embodiment comprising a single unitary tray 40 having a flat base 41 from which project three "islands" 42, 43, 44 two of which, the islands 43, 44 are substantially circular and the third of which, the island 42 has a substantially arcuate outer surface 45. It will be understood that the tray 40 of Figure 7 corresponds to the tray 11 of Figures 1-6 and that the "islands" 42-44 largely correspond to the bosses 21-23 of Figures 1-6.

Upstanding from the base 41 are a further plurality of curved walls 46, 47 at one end and 48, 49, 50 at the other end, concentric with the islands 42, 44 and together defining a path for receiving an optical fibre as will be described below.

The islands 42, 43, 44 as well as the arcuate walls 46-50 have respective radially inwardly and radially outwardly projecting tabs or lugs 51 (not individually referenced) which serve as retainers for an optical fibre housed in the channels defined by the islands and the walls.

In use of this embodiment, an intermediate loop of an optical fibre or pigtail (not shown) can be formed around the island 44, and thereafter the doubled optical fibre can be laid into the channels defined between the islands and the walls in a spiral configuration in a path illustrated by the arrows A, B, C etc in sequence up to K which illustrates an exit from the tray.

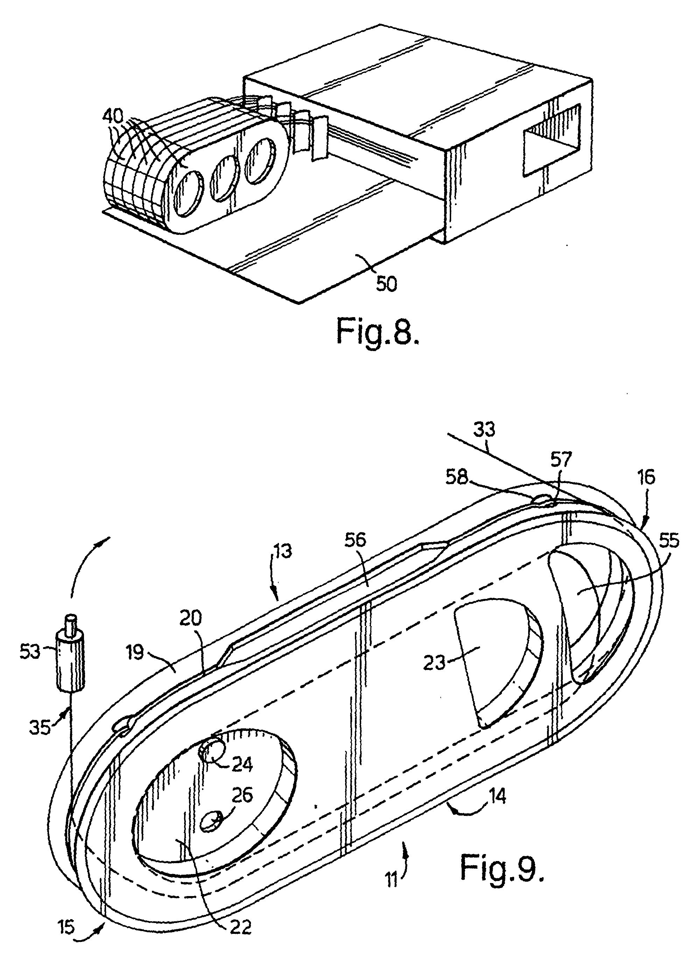

The channels defined between adjacent walls have a width such as to receive two lengths of optical fibre side-by-side but no more. The height of the walls is such as substantially to match the diameter of the optical fibres. The tray 40 thus occupies an absolute minimum of space such that adjacent trays 40 can be placed in a stack as illustrated in Figure 8, occupying the smallest possible width. Individual trays 40 can be retained on a shelf 41 by any suitable means, for example by surface formations or grooves on the shelf 50 engaging the individual bases 41 of the individual trays. Alternatively a rod (not shown) may pass through aligned openings in the bases of all trays. Each tray, containing a single individual optical fibre or pigtail, can then be removed from the stacked tray without disturbing any of the others such that subsequent reassignment of connections can be made quickly and easily and the spare length returned to a well managed and organised configuration.

Referring now to Figure 9, a housing generally indicated 11 for a spare length of optical fibre 35 having a connector 53 at one end and a spare end 33 for splicing to another optical fibre, comprises two corresponding half shells 12 having a generally oval configuration with two parallel rectilinear sides 13, 14 and two semi-circular ends 15, 16. As in the embodiment of Figs. 1-6, each half shell has a substantially flat base, surrounded by a perimetral wall the free edge of which defines a rim or lip 19, which, when the two half shells are placed face to face with their respective rims in register, defines an encircling junction line 20.

The two half shells have embossments or "islands" 22, 23 projecting from the base. On the surfaces of one pair of islands 22 are formed respective circular projections 24 and respective circular apertures 26 that define "snap-fit" retaining means when one half shell is placed over the other as indicated above.

The two half shells further have corresponding apertures in their flat bases between the island 23 and the perimetral wall near one semi-circular end so that when superimposed they define an aperture 55 passing through the housing. The rims of each half shell have corresponding recesses (28; 29) in their rectilinear portions so that the shells when joined a pair of recesses define an opening 56 in the lateral edge of the housing. Corresponding notches (30, 31) are also provided in the semi-circular portions of the rims of each half shell so as to form other openings 57 in the edges of the housing. One or more of these notches has an associated lug 58 projecting over it.

Working toward the end of the fibre 35 with the connector 53, the user passes the fibre through the rims of the semi-circular edge of the housing across the aperture and onto the island 23. The fibre is then passed down to island 22 and wound around the two islands (see dashed lines in the drawing). At some convenient point during the winding the user inserts a finger into the aperture 55 so that the winding now continues through the rims of the housing, into the aperture 55 around the finger and back onto the island 22. At the end of the winding the connector can be positioned in or adjacent the opening 56 by partial or complete removal of the finger from the aperture and pulling on one end or other of the fibre (for example at the connector 53, in the direction of the arrow shown). Slack in the windings, which is visible in the aperture 55, is thereby taken up. Once the connector is positioned the free end 33 of the fibre can be similarly positioned by passing it to an opening 57 where it can be engaged by the lug 58.

## Claims

1. A housing (11) for receiving and retaining a spare length of optical fibre (33), comprising two generally planar support members (12a, 12b) having corresponding peripheral rims (19) which contact one another at the perimeter thereof, and holding means (24,25,26,27) for holding the two support members (12a, 12b) together at a point spaced from the rims thereof, **characterised by** at least one of the support members having sufficient resilience at least at or in the region of the rim (19) thereof to allow it to flex so that an optical fibre (32, 33, 34) can be introduced into or withdrawn from the housing (11) by pressing and thus passing it between the two contacting rims of the two support members held together.

2. A housing according to Claim 1, in which there are provided loop engagement means within the housing (11) for engagement by a loop (32) of optical fibre formed intermediate the ends (33, 34) thereof.

3. A housing according to Claim 2, in which the said loop engagement means comprise a formation spanning the interior space between the said two generally planar support members (12a, 12b).

4. A housing according to Claim 3, in which the said formation is at least one boss (21) projecting from a base of at least one of the said two support members (12a; 12b).

5. A housing according to Claim 4, in which the said formation comprises two facing bosses (21) each projecting from a base of a respective member (12a; 12b) and contacting one another to define the said formation spanning the interior space between the two support members.

6. A housing according to any of Claims 1 to 5, in which there are provided guide means within the interior of the housing (11) for guiding the spare length of optical fibre (33, 34) wound within the housing.

7. A housing as claimed in Claim 6, in which the said internal guide means comprise guide bosses (23) projecting from at least one of the said two support members (12a; 12b).

8. A housing as claimed in Claim 7, in which the guide bosses (23) project from both members (12a, 12b) and contact one another to form a structure spanning the interior of the said housing (11) to form the said guides.

9. A housing according to any of the preceding Claims, in which the guides include upstanding parallel walls (46, 47; 48, 49) together defining a substantially continuous channel for receiving a spare length of optical fibre (32, 33, 34).

10. A housing according to Claim 9, in which the said upstanding parallel walls (46, 47; 48, 49) are spaced by a distance sufficient to allow just two portions (33, 34) of an optical fibre to lie side-by-side without one crossing over the other in the channel defined thereby.

11. A housing according to any of the preceding Claims, in which retaining means are provided for holding the two support members (12a, 12b) together.

12. A housing according to Claim 11, in which the said retaining means comprise cooperating releasable fastening means (24, 25, 26, 27) on the said guide bosses (22, 23).

13. A housing according to Claim 11, in which the said retaining means comprise permanent fixing means on the said guide bosses (22, 23).

14. A housing according to any of Claims 1 to 13, in which at least one rim (19) of at least one of the said support members (12a, 12b) has at least one recessed portion (28, 29) forming, in the said housing (11), an opening (56) for receiving a connector (53) at one end of the optical fibre (35) and through which the said loop (32) can be introduced whilst the two members are held together.

15. A housing according to any of the preceding Claims, in which at least one of the support members has an aperture (55) to allow the user to insert a removable member into the interior of the housing so as to form a temporary guide for winding of the optical fibre into the housing.

16. A housing according to Claim 15, in which each of the said generally planar support members has a corresponding opening so as to define an aperture (55) passing through the housing.

17. A housing according to any preceding Claim, in which the or each support member (12a, 12b) is vacuum formed from plastics material.

18. A kit of parts for optical fibre management, comprising:
• a rack or shelf (50) for accommodating optical fibre storage units, and
• a plurality of optical fibre storage units,
**characterised in that** the storage units comprise independently retained housings (11, 40) according to any preceding Claim, allowing separate removal to access an individual optical fibre or pigtail.

19. A cabinet or patch panel for optical fibre management, **characterised by** having one or more racks or shelves (50) provided with independently retained housings (11, 40) as claimed in any of Claims 1-17.

## Patentansprüche

1. Gehäuse (11) zur Aufnahme und zum Festlegen einer Reservelänge eines Lichtleiters (33), wobei das Gehäuse folgendes aufweist: zwei im allgemeinen ebene Tragelemente (12a, 12b), die entsprechende Umfangsränder (19) haben, die einander an ihrem Umfang berühren, und Halteeinrichtungen (24, 25, 26, 27) zum Zusammenhalten der zwei Tragelemente (12a, 12b) an einer von ihren Rändern beabstandeten Stelle,
**dadurch gekennzeichnet,**
**daß** mindestens eines der Tragelemente zumindest an oder in dem Bereich seines Randes (19) eine ausreichende Elastizität hat, um gebogen werden zu können, so daß ein Lichtleiter (32, 33, 34) durch Drücken und anschließendes Führen desselben zwischen den beiden sich berührenden Rändern der zwei zusammengehaltenen Tragelemente in das Gehäuse (11) eingeführt oder aus diesem herausgezogen werden kann.

2. Gehäuse nach Anspruch 1,
wobei eine Schleifeneingriffseinrichtung in dem Gehäuse (11) für den Eingriff mit einer Schleife (32) des Lichtleiters vorgesehen ist, die zwischen dessen Enden (33, 34) gebildet ist.

3. Gehäuse nach Anspruch 2,
wobei die Schleifeneingriffseinrichtung eine Formation aufweist, die den Innenraum zwischen den beiden im allgemeinen ebenen Tragelementen (12a, 12b) überbrückt.

4. Gehäuse nach Anspruch 3,
wobei die Formation mindestens ein Vorsprung (21) ist, der von einer Basis von mindestens einem der beiden Tragelemente (12a; 12b) vorspringt.

5. Gehäuse nach Anspruch 4,
wobei die Formation zwei einander zugewandte Vorsprünge (21) aufweist, die jeweils von einer Basis eines jeweiligen Elements (12a; 12b) vorspringen und einander berühren, um die genannte Formation zu bilden, die den Innenraum zwischen den beiden Tragelementen überbrückt.

6. Gehäuse nach einem der Ansprüche 1 bis 5,
wobei eine Führungseinrichtung in dem Innenraum des Gehäuses (11) vorgesehen ist, um die Reservelänge des Lichtleiters (33, 34) zu führen, der in dem Gehäuse aufgewickelt ist.

7. Gehäuse nach Anspruch 6,
wobei die innere Führungseinrichtung Führungsvorsprünge (23) aufweist, die von mindestens einem der beiden Tragelemente (12a; 12b) vorspringen.

8. Gehäuse nach Anspruch 7,
wobei die Führungsvorsprünge (23) von beiden Elementen (12a, 12b) vorspringen und einander berühren, um eine Konstruktion zu bilden, die den Innenraum des Gehäuses (11) überbrückt, um die genannten Führungen zu bilden.

9. Gehäuse nach einem der vorhergehenden Ansprüche,
wobei die Führungen hochstehende parallele Wände (46, 47; 48, 49) aufweisen, die gemeinsam einen im wesentlichen kontinuierlichen Kanal zur Aufnahme einer Reservelänge des Lichtleiters (32, 33, 34) bilden.

10. Gehäuse nach Anspruch 9,
wobei die hochstehenden parallelen Wände (46, 47; 48, 49) mit einer Distanz voneinander beabstandet sind, die ausreicht, um es zu ermöglichen, daß nur zwei Bereiche (33, 34) eines Lichtleiters nebeneinander liegen, ohne einander in dem dadurch gebildeten Kanal zu überkreuzen.

11. Gehäuse nach einem der vorhergehenden Ansprüche,
wobei Festlegeeinrichtungen zum Zusammenhalten der beiden Tragelemente (12a, 12b) vorgesehen sind.

12. Gehäuse nach Anspruch 11,
wobei die Festlegeeinrichtungen zusammenwirkende lösbare Befestigungseinrichtungen (24, 25, 26, 27) an den Führungsvorsprüngen (22, 23) aufweisen.

13. Gehäuse nach Anspruch 11,
wobei die Festlegeeinrichtungen permanente Befestigungseinrichtungen an den Führungsvorsprüngen (22, 23) aufweisen.

14. Gehäuse nach einem der Ansprüche 1 bis 13,
wobei mindestens ein Rand (19) von mindestens einem der Tragelemente (12a, 12b) mindestens einen ausgesparten Bereich (28, 29) hat, der in dem Gehäuse (11) eine Öffnung (56) zur Aufnahme eines Verbinders (53) an dem einen Ende des Lichtleiters (35) bildet und durch den die Schleife (32) eingeführt werden kann, während die beiden Elemente zusammengehalten sind.

15. Gehäuse nach einem der vorhergehenden Ansprüche,
wobei mindestens eines der Tragelemente eine Öffnung (55) hat, um es dem Benutzer zu ermöglichen, ein entnehmbares Element in den Innenraum des Gehäuses einzusetzen, um eine vorübergehende Führung zum Aufwickeln des Lichtleiters in dem Gehäuse zu bilden.

16. Gehäuse nach Anspruch 15,
wobei jedes der im allgemeinen ebenen Tragelemente eine entsprechende Öffnung hat, um eine das Gehäuse durchsetzende Öffnung (55) zu bilden.

17. Gehäuse nach einem der vorhergehenden Ansprüche,
wobei das oder jedes Tragelement (12a, 12b) aus Kunststoff vakuumgeformt ist.

18. Teilesatz für das Lichtleitermanagement, der folgendes aufweist:
- ein Gestell oder Regal (50) zur Unterbringung von Lichtleiterlagereinheiten und
- eine Vielzahl von Lichtleiterlagereinheiten,
**dadurch gekennzeichnet,**
**daß** die Lagereinheiten unabhängig festgelegte Gehäuse (11, 40) nach einem der vorhergehenden Ansprüche aufweisen, die die separate Entnahme für den Zugang zu einem einzelnen Lichtleiter oder Pigtail ermöglichen,

19. Schrank oder Schalttafel für das Lichtleitermanagement,
**dadurch gekennzeichnet,**
**daß** er bzw. sie ein oder mehrere Gestelle oder Regale (50) aufweist, die mit unabhängig festgelegten Gehäusen (11, 40) nach einem der Ansprüche 1 bis 17 versehen sind.

## Revendications

1. Boîtier (11) destiné à recevoir et retenir une longueur de réserve de fibre optique (33), comportant deux éléments de support globalement plans (12a, 12b) ayant des rebords périphériques correspondants (19) qui sont en contact l'un avec l'autre à leur périmètre, et des moyens de maintien (24, 25, 26, 27) destinés à maintenir les deux éléments de support (12a, 12b) assemblés en un point espacé de leurs rebords, **caractérisé en ce qu'**au moins l'un des éléments de support possède une élasticité suffisante, au moins à ou dans la région de son rebord (19), pour lui permettre de fléchir afin qu'une fibre optique (32, 33, 34) puisse être introduite dans le, ou retirée du, boîtier (11) en étant pressée, et ainsi passée, entre les deux rebords en contact des deux éléments de support maintenus assemblés.

2. Boîtier selon la revendication 1, dans lequel sont prévus des moyens d'engagement de boucle à l'intérieur du boîtier (11) pour un engagement par une boucle (32) de fibre optique formée entre ses extrémités (33, 34).

3. Boîtier selon la revendication 2, dans lequel lesdits moyens d'engagement de boucle comprennent une conformation traversant l'espace intérieur entre lesdits deux éléments de support globalement plans (12a, 12b).

4. Boîtier selon la revendication 3, dans lequel ladite conformation est au moins un bossage (21) faisant saillie d'une base d'au moins l'un desdits deux éléments de support (12a ; 12b).

5. Boîtier selon la revendication 4, dans lequel ladite conformation comporte deux bossages (21) face-à-face faisant saillie chacun d'une base d'un élément respectif (12a ; 12b) et entrant en contact l'un avec l'autre pour définir ladite conformation traversant l'espace intérieur entre les deux éléments de support.

6. Boîtier selon l'une quelconque des revendications 1 à 5, dans lequel des moyens de guidage sont prévus à l'intérieur du boîtier (11) pour guider la longueur de réserve de fibre optique (33, 34) bobinée dans le boîtier.

7. Boîtier selon la revendication 6, dans lequel lesdits moyens intérieurs de guidage comprennent des bossages de guidage (23) faisant saillie d'au moins l'un desdits deux éléments de support (12a ; 12b).

8. Boîtier selon la revendication 7, dans lequel les bossages de guidage (23) font saillie des deux éléments (12a, 12b) et entrent en contact l'un avec l'autre pour former une structure traversant l'intérieur dudit boîtier (11) afin de former lesdits guides.

9. Boîtier selon l'une quelconque des revendications précédentes, dans lequel les guides comprennent des parois parallèles (46, 47 ; 48, 49) orientées vers le haut, définissant ensemble un canal sensiblement continu pour recevoir une longueur de réserve de fibre optique (32, 33, 34).

10. Boîtier selon la revendication 9, dans lequel lesdites parois parallèles (46, 47 ; 48, 49) orientées vers le haut sont espacées d'une distance suffisante pour juste permettre à deux tronçons (33, 34) d'une fibre optique de s'étendre côte à côte sans se croiser l'un l'autre dans le canal qu'elles définissent.

11. Boîtier selon l'une quelconque des revendications précédentes, dans lequel des moyens de retenue sont prévus pour maintenir les deux éléments de support (12a, 12b) assemblés.

12. Boîtier selon la revendication 11, dans lequel lesdits moyens de retenue comprennent des moyens de fixation libérable coopérants (24, 25, 26, 27) sur lesdits bossages de guidage (22, 23).

13. Boîtier selon la revendication 11, dans lequel lesdits moyens de retenue comprennent des moyens de fixation permanente sur lesdits bossages de guidage (22, 23).

14. Boîtier selon l'une quelconque des revendications 1 à 13, dans lequel au moins un rebord (19) d'au moins l'un desdits éléments de support (12a, 12b) comporte au moins une partie en creux (28, 29) formant, dans ledit boîtier (11), une ouverture (56) destinée à recevoir un connecteur (53) à une extrémité de la fibre optique (35) et à travers laquelle ladite boucle (32) peut être introduite tandis que les deux éléments sont maintenus assemblés.

15. Boîtier selon l'une quelconque des revendications précédentes, dans lequel au moins l'un des éléments de support présente un orifice (55) pour permettre à l'utilisateur d'introduire un organe amovible à l'intérieur du boîtier afin de former un guide temporaire pour le bobinage de la fibre optique dans le boîtier.

16. Boîtier selon la revendication 15, dans lequel chacun desdits éléments globalement plans de support présente une ouverture correspondante afin de définir un orifice (55) traversant le boîtier.

17. Boîtier selon l'une quelconque des revendications précédentes, dans lequel le ou chaque élément de support (12a, 12b) est formé sous vide en matière plastique.

18. Ensemble de pièces pour la gestion de fibres optiques, comportant :
· une baie ou étagère (50) destinée à recevoir des unités de stockage de fibres optiques, et
· plusieurs unités de stockage de fibres optiques,
**caractérisé en ce que** les unités de stockage comprennent des boîtiers (11, 40) selon l'une quelconque des revendications précédentes, retenus de façon indépendante, permettant un enlèvement séparé pour accéder à une fibre optique ou une queue de cochon individuelle.

19. Armoire ou panneau de connexion pour la gestion de fibres optiques, **caractérisé en ce qu'**il comporte une ou plusieurs baies ou étagères (50) pourvues de boîtiers (11, 40) selon l'une quelconque des revendications 1 à 17, retenus de façon indépendante.
